(19) Europäisches Patentamt
European Patent Office
Office européen des brevets

(11) **EP 4 462 636 A1**

(12) **EUROPEAN PATENT APPLICATION**

(43) Date of publication:
**13.11.2024 Bulletin 2024/46**

(21) Application number: **24161511.1**

(22) Date of filing: **05.03.2024**

(51) International Patent Classification (IPC):
**H02J 7/02** (2016.01)        **H02M 1/32** (2007.01)

(52) Cooperative Patent Classification (CPC):
**H02J 7/02; H02M 1/008; H02M 1/32; H02M 7/23**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.03.2023 CN 202320582676 U**

(71) Applicant: **Huawei Digital Power Technologies
Co., Ltd.
Shenzhen, Guangdong 518043 (CN)**

(72) Inventors:
• **LIU, Yaping**
  **518043 Shenzhen (CN)**
• **HU, Biao**
  **518043 Shenzhen (CN)**
• **YANG, Jin**
  **518043 Shenzhen (CN)**
• **LV, Zejie**
  **518043 Shenzhen (CN)**

(74) Representative: **Gill Jennings & Every LLP
The Broadgate Tower
20 Primrose Street
London EC2A 2ES (GB)**

(54) **CHARGING SYSTEM**

(57) This application provides a charging system. The system includes: M alternating current-direct current AC-DC conversion modules, where each AC-DC conversion module includes an AC-DC conversion circuit and a first fuse group, and a positive output end and a negative output end of the AC-DC conversion circuit are respectively connected to a first bus and a second bus by using the first fuse group; and N direct current-direct current conversion DC-DC conversion modules, where each DC-DC conversion module includes a DC-DC conversion circuit, and a positive input end and a negative input end of the DC-DC conversion circuit are respectively configured to be connected to the first bus and the second bus.

FIG. 1

EP 4 462 636 A1

## Description

## TECHNICAL FIELD

This application relates to the energy field, and more specifically, to a charging system.

## BACKGROUND

Methods of photovoltaic deployment and energy storage deployment are used to implement power generation and peak-cutting and valley-filling of a charging station, to reduce running costs of the charging station. To implement the energy storage deployment, AC-DC parts of a charging module may be connected in parallel, buses are pooled, and a bus interface is exposed to an energy storage device, to implement charging and discharging of the energy storage device.

However, in a plurality of alternating current-direct current (alternating current-direct current, AC-DC) conversion modules connected in parallel, when one module is faulty and causes a short circuit in an output, another module connected to the module in parallel also experiences a short circuit in an output. That is, without a good protection capability, all modules are damaged.

Therefore, how to reduce impact on charging efficiency while parallel protection for a plurality of modules is implemented becomes an urgent problem to be resolved.

## SUMMARY

This application provides a charging system, so that impact on charging efficiency can be reduced while parallel protection for a plurality of modules is implemented.

According to a first aspect, a charging system is provided, including: M alternating current-direct current AC-DC conversion modules, where M is a positive integer, an input side of each AC-DC conversion module is configured to be connected to an alternating current source, each AC-DC conversion module includes one positive output port, one negative output port, an AC-DC conversion circuit, and a first fuse group, the AC-DC conversion circuit includes one positive output port and one negative output port, the first fuse group includes two fuses, the positive output port of each AC-DC conversion module is configured to be connected to a first bus, the negative output port of each AC-DC conversion module is configured to be connected to a second bus, an input side of the AC-DC conversion circuit is configured to be connected to the input side of the AC-DC conversion module, the positive output port of the AC-DC conversion circuit is connected to the positive output port of the AC-DC conversion module by using one fuse in the first fuse group, and the negative output port of the AC-DC conversion circuit is connected to the negative output port of the AC-DC conversion module by using the other fuse in the first fuse group; and N direct current-direct current conversion DC-DC conversion modules, where N≥1, each DC-DC conversion module includes one positive input port, one negative input port, and a DC-DC conversion circuit, the positive input port of each DC-DC conversion module is configured to be connected to the first bus, the negative input port of each DC-DC conversion module is configured to be connected to the second bus, the DC-DC conversion circuit includes one positive input port and one negative input port, the positive input port of the DC-DC conversion circuit is configured to be connected to the positive input port of the DC-DC conversion module, and the negative input port of the DC-DC conversion circuit is configured to be connected to the negative input port of the DC-DC conversion module.

In the technical solution of this application, a protection fuse is disposed on each of the positive output port and the negative output port of the AC-DC conversion circuit inside each AC-DC conversion module in the charging system, to ensure that the protection fuse is blown when one or more AC-DC conversion modules are faulty, so that the faulty module is separated from the system, to prevent the fault from spreading to another module. This can reduce impact on charging efficiency while parallel protection for a plurality of modules is implemented.

With reference to the first aspect, in some implementations of the first aspect, each DC-DC conversion module includes a second fuse group. The second fuse group includes two fuses. The positive input port of the DC-DC conversion circuit is connected to the positive input port of the DC-DC conversion module by using one fuse in the second fuse group. The negative input port of the DC-DC conversion circuit is connected to the negative input port of the DC-DC conversion module by using the other fuse in the second fuse group.

In the technical solution of this application, a protection fuse is disposed on each of the positive input port and the negative input port of the DC-DC conversion circuit inside each DC-DC conversion module of the charging system, to ensure that the protection fuse is blown when one or more DC-DC conversion modules are faulty, so that the faulty module is separated from the system, to prevent the fault from spreading to another module. This can implement parallel protection for both the AC-DC conversion modules and the DC-DC conversion modules.

With reference to the first aspect, in some implementations of the first aspect, each AC-DC conversion module includes a third fuse group. The third fuse group includes three fuses. A first input end of the AC-DC conversion circuit is connected to a first input port of the AC-DC conversion module by using a first fuse in the third fuse group. A second input end of the AC-DC conversion circuit is connected to a second input port of the AC-DC conversion module by using a second fuse in the third fuse group. A third input end of the AC-DC conversion circuit is connected to a third input port of the AC-DC conversion module by using a third fuse in the third fuse group.

In the technical solution of this application, a protection fuse is disposed on each three-phase input port of the AC-DC conversion circuit inside each AC-DC conversion module of the charging system, to ensure that the protection fuse is blown when one or more AC-DC conversion modules are faulty, so that the faulty module is separated from the system, to prevent the fault from spreading to another module. This implements parallel protection for a plurality of modules.

With reference to the first aspect, in some implementations of the first aspect, each AC-DC conversion module includes a switching assembly. The switching assembly includes three switching devices. A first input port of the AC-DC conversion circuit is connected to a first input port of the AC-DC conversion module by using a first switching device in the switching assembly. A second input port of the AC-DC conversion circuit is connected to a second input port of the AC-DC conversion module by using a second switching device in the switching assembly. A third input port of the AC-DC conversion circuit is connected to a third input port of the AC-DC conversion module by using a third switching device in the switching assembly.

In the technical solution of this application, the switching assembly is disposed between the input ports of the AC-DC conversion module of the charging system and the input endss of the AC-DC conversion circuit inside the AC-DC conversion module, so that working of the charging system can be controlled by using the switch assembly. This improves running flexibility of the charging system.

With reference to the first aspect, in some implementations of the first aspect, each AC-DC conversion module includes a switching assembly. The switching assembly includes three switching devices. The first input port of the AC-DC conversion circuit is connected to the first fuse by using a first switching device in the switching assembly. The second input port of the AC-DC conversion circuit is connected to the second fuse by using a second switching device in the switching assembly. The third input port of the AC-DC conversion circuit is connected to the third fuse by using a third switching device in the switching assembly.

In the technical solution of this application, the switching assembly is disposed between protection fuses disposed in front of the AC-DC conversion circuit inside the AC-DC conversion module of the charging system and the alternating current source, so that working of the charging system can be controlled by using the switching assembly. This improves running flexibility of the charging system.

With reference to the first aspect, in some implementations of the first aspect, $M \geq 3$; and a pre-arcing Joule integral of the fuse in the first fuse group is $W_A$, an operating Joule integral of the fuse is $W_B$, and $W_A > 0.25 W_B$.

In the technical solution of this application, fuses whose pre-arcing Joule integrals are greater than 1/4 of the operating Joule integral are selected to form the first fuse group of the AC-DC conversion module, so that when one of the AC-DC conversion modules in the charging system is faulty, only fuses corresponding to the module are blown, and normal working of fuses corresponding to another AC-DC conversion module is not affected. This can ensure stability of parallel protection for the AC-DC conversion modules.

With reference to the first aspect, in some implementations of the first aspect, an operating Joule integral of the fuse in the second fuse group is less than the pre-arcing Joule integral of the fuse in the first fuse group.

In the technical solution of this application, fuses whose operating Joule integrals are less than the pre-arcing Joule integral of the fuse in the first fuse group are selected to form the second fuse group of the DC-DC conversion module, so that when one of the DC-DC conversion modules in the charging system is faulty, only fuses corresponding to the module are blown, and the fuses corresponding to the AC-DC conversion module are not affected. This can ensure the stability of the parallel protection for the AC-DC conversion modules.

With reference to the first aspect, in some implementations of the first aspect, the charging system further includes an insulation detection module, where the insulation detection module is configured to detect at least one of a first impedance of the first bus relative to protecting earthing PE and a second impedance of the second bus relative to protecting earthing PE; and a control module, where the control module is configured to: in response to that the at least one of the first impedance and the second impedance is less than a first preset value, turn off the switching assembly.

In the technical solution of this application, the insulation detection module is disposed in the charging system, and insulation detection is performed on a direct-current positive bus and a direct-current negative bus after the charging system is soft-started, so that fault information is reported to the control module when there is an electric leakage risk (that is, the at least one of the first impedance or the second impedance is less than the first preset value). Therefore, the control module can turn off a switching transistor in time, to prevent the charging system from being connected to the alternating current source when there is an electric leakage risk, and improve security of the charging system.

With reference to the first aspect, in some implementations of the first aspect, an output end of each DC-DC conversion module is configured to be connected to a power consuming device, and each DC-DC conversion module is configured to output a current to charge the power consuming device.

According to a second aspect, an AC-DC conversion module is provided. The AC-DC conversion module includes an AC-DC conversion circuit, a first fuse group, and input and output ports. An input side of the AC-DC conversion circuit is configured to be connected to an alternating current source. A positive output end of the AC-DC conversion circuit is connected to a positive output port of the AC-DC conversion module by using one fuse in the first fuse group. A negative output end of the AC-DC conversion circuit is connected to a negative output port of the AC-DC conversion module by using another fuse in the first fuse group.

In the technical solution of this application, a protection fuse is disposed on each of a positive output port and a negative output port of the AC-DC conversion circuit inside the AC-DC conversion module, to ensure that the protection fuse is blown when the AC-DC conversion module is faulty, so that the faulty module can be separated from the system when a plurality of AC-DC conversion modules are connected in parallel, to prevent the fault from spreading to another module. This can reduce impact on charging efficiency while parallel protection for a plurality of modules is implemented.

With reference to the second aspect, in some implementations of the second aspect, the AC-DC conversion module includes a third fuse group, and the third fuse group includes three fuses. A first input end of the AC-DC conversion circuit is connected to a first input port of the AC-DC conversion module by using a first fuse in the third fuse group. A second input end of the AC-DC conversion circuit is connected to a second input port of the AC-DC conversion module by using a second fuse in the third fuse group. A third input end of the AC-DC conversion circuit is connected to a third input port of the AC-DC conversion module by using a third fuse in the third fuse group.

In the technical solution of this application, a protection fuse is disposed on each three-phase input port of the AC-DC conversion circuit inside the AC-DC conversion module, to ensure that the protection fuse is blown when the AC-DC conversion module is faulty, so that the faulty module is disconnected from the alternating current source, to prevent the fault from spreading to another module. This implements parallel protection for a plurality of modules.

With reference to the second aspect, in some implementations of the second aspect, the AC-DC conversion module includes a switching assembly. The switching assembly includes three switching devices. The first input end of the AC-DC conversion circuit is connected to the first fuse by using a first switching device in the switching assembly. The second input end of the AC-DC conversion circuit is connected to the second fuse by using a second switching device in the switching assembly. The third input end of the AC-DC conversion circuit is connected to the third fuse by using a third switching device in the switching assembly.

In the technical solution of this application, a switch assembly is disposed between the input ports of the AC-DC conversion module and the input ends of the AC-DC conversion circuit inside the AC-DC conversion module, so that working of the AC-DC conversion module can be controlled by using the switch assembly. This improves running flexibility of the AC-DC conversion module.

According to a third aspect, a charging system is provided, including: J alternating current-direct current conversion AC-DC conversion modules, where J is a positive integer, an input side of each AC-DC conversion module is configured to be connected to an alternating current source, each AC-DC conversion module includes one positive output port and one negative output port, the positive output port of each AC-DC conversion module is configured to be connected to a first bus, and the negative output port of each AC-DC conversion module is configured to be connected to a second bus; K direct current-direct current conversion DC-DC conversion modules, where K≥1, each DC-DC conversion module includes one positive input port and one negative input port, the positive input port of each DC-DC conversion module is configured to be connected to the first bus, and the negative input port of each DC-DC conversion module is configured to be connected to the second bus; and J fourth fuse groups, where the J fourth fuse groups are in a one-to-one correspondence with the J AC-DC conversion modules, each fourth fuse group includes two fuses, a positive output port of a $j^{th}$ AC-DC conversion module is connected to the first bus by using one fuse in a $j^{th}$ fourth fuse group, a negative output port of the $j^{th}$ AC-DC conversion module is connected to the second bus by using the other fuse in the $j^{th}$ fourth fuse group, $j \in [1, J]$, and the $j^{th}$ fourth fuse group corresponds to the $j^{th}$ AC-DC conversion module.

In the technical solution of this application, a protection fuse is disposed on each of an output positive bus and an output negative bus of each AC-DC conversion module of the charging system, to ensure that the protection fuse is blown when one or more AC-DC conversion modules are faulty, so that the faulty module is separated from the system, to prevent the fault from spreading to another module. This can reduce impact on charging efficiency while parallel protection for a plurality of modules is implemented.

With reference to the third aspect, in some implementations of the third aspect, the charging system further includes K fifth fuse groups. The K fifth fuse groups are in a one-to-one correspondence with the K DC-DC conversion modules, and each fifth fuse group includes two fuses. A positive input port of a $k^{th}$ DC-DC conversion module is connected to the first bus by using one fuse in a $k^{th}$ fifth fuse group, and a negative input port of the $k^{th}$ DC-DC conversion module is connected to the second bus by using the other fuse in the $k^{th}$ fifth fuse group, where $k \in [1, K]$, and the $k^{th}$ fifth fuse group corresponds to the $k^{th}$ DC-DC conversion module.

In the technical solution of this application, a protection fuse is disposed on an input positive bus and an input negative bus of each DC-DC conversion module of the charging system, to ensure that the protection fuse is blown when one or more DC-DC conversion modules are faulty, so that the faulty module is separated from the system, to prevent the fault from spreading to another module. This can implement parallel protection for both the AC-DC conversion modules and the DC-DC conversion modules.

With reference to the third aspect, in some implementations of the third aspect, the charging system includes J sixth fuse groups. The J sixth fuse groups are in a one-to-one correspondence with the J AC-DC conversion modules, and each sixth fuse group includes three fuses. A first input port of the $j^{th}$ AC-DC conversion module is connected to the alternating current source by using a first fuse in a $j^{th}$ sixth fuse group, a second input port of the $j^{th}$ AC-DC conversion module is connected to the alternating current source by using a second fuse in the $j^{th}$ sixth fuse group, and a third input port of the $j^{th}$ AC-DC conversion module is connected to the alternating current source by using a third fuse in the $j^{th}$ sixth fuse group, where $j \in [1, J]$, and the $j^{th}$ sixth fuse group corresponds to the $j^{th}$ AC-DC conversion module.

In the technical solution of this application, a protection fuse is disposed on input three phases of each AC-DC conversion module of the charging system, to ensure that the protection fuse is blown when one or more AC-DC conversion modules are faulty, so that the faulty module is separated from the system, to prevent the fault from spreading to another module. This implements parallel protection for a plurality of modules.

With reference to the third aspect, in some implementations of the third aspect, J switching assemblies are disposed. The J switching assemblies are in a one-to-one correspondence with the J AC-DC conversion modules, and each switching assembly includes three switching devices. A first input port of the $j^{th}$ AC-DC conversion module is connected to the alternating current source by using a fourth switching device in a $j^{th}$ switching assembly, a second input port of the $j^{th}$ AC-DC conversion module is connected to the alternating current source by using a fifth switching device in the $j^{th}$ switching assembly, and a third input port of the $j^{th}$ AC-DC conversion module is connected to the alternating current source by using a sixth switching device in the $j^{th}$ switching assembly, where $j \in [1, J]$, and the $j^{th}$ switching assembly corresponds to the $j^{th}$ AC-DC conversion module.

In the technical solution of this application, a switch assembly is disposed between the AC-DC conversion module of the charging system and the alternating current source, so that working of the charging system can be controlled by using the switch assembly. This improves running flexibility of the charging system.

With reference to the third aspect, in some implementations of the third aspect, the charging system includes J switching assemblies. The J switching assemblies are in a one-to-one correspondence with the J AC-DC conversion modules, and each switching assembly includes three switching devices. The first input port of the $j^{th}$ AC-DC conversion module is connected to the first fuse by using a fourth switching device in a $j^{th}$ switching assembly, the second input port of the $j^{th}$ AC-DC conversion module is connected to the second fuse by using a fifth switching device in the $j^{th}$ switching assembly, and the third input port of the $j^{th}$ AC-DC conversion module is connected to the third fuse by using a sixth switching device in the $j^{th}$ switching assembly, where $j \in [1, J]$, and the $j^{th}$ switching assembly corresponds to the $j^{th}$ AC-DC conversion module.

In the technical solution of this application, the switching assembly is disposed between the AC-DC conversion module of the charging system and protection fuses disposed in front of the AC-DC conversion module, so that working of the charging system can be controlled by using the switching assembly. This improves running flexibility of the charging system.

With reference to the third aspect, in some implementations of the third aspect, $J \geq 3$; and a pre-arcing Joule integral of the fuse in the fourth fuse group is $W_A$, an operating Joule integral of the fuse is $W_B$, and $W_A > 0.25 W_B$.

In the technical solution of this application, fuses whose pre-arcing Joule integrals are greater than 1/4 of the operating Joule integral are selected to form the fourth fuse group of the AC-DC conversion module, so that when one of the AC-DC conversion modules in the charging system is faulty, only fuses corresponding to the module are blown, and normal working of fuses corresponding to another AC-DC conversion module is not affected. This can ensure stability of parallel protection for the AC-DC conversion modules.

With reference to the third aspect, in some implementations of the third aspect, an operating Joule integral of the fuse in the fifth fuse group is less than the pre-arcing Joule integral of the fuse in the fourth fuse group.

In the technical solution of this application, fuses whose operating Joule integrals are less than the pre-arcing Joule integral of the fuse in the fourth fuse group are selected to form the fifth fuse group of the DC-DC conversion module, so that when one of the DC-DC conversion modules in the charging system is faulty, only fuses corresponding to the module are blown, and the fuses corresponding to the AC-DC conversion module are not affected. This can ensure the stability of the parallel protection for the AC-DC conversion modules.

With reference to the third aspect, in some implementations of the third aspect, the charging system further includes an insulation detection module, where the insulation detection module is configured to detect at least one of a third impedance of the first bus relative to protecting earthing PE and a fourth impedance of the second bus relative to protecting earthing PE; and a control module, where the control module is configured to: in response to that the at least one of the third impedance and the fourth impedance is less than a first preset value, turn off the switching assembly.

In the technical solution of this application, the insulation detection module is disposed in the charging system, and insulation detection is performed on a direct-current positive bus and a direct-current negative bus after the charging system is soft-started, so that fault information is reported to the control module when there is an electric leakage risk (that is, the at least one of the third impedance or the fourth impedance is less than the first preset value). Therefore, the control module can turn off a switching transistor in time, to prevent the charging system from being connected to the alternating current source when there is an electric leakage risk, and improve security of the charging system.

**BRIEF DESCRIPTION OF DRAWINGS**

FIG. 1 is a schematic diagram of a charging system 100 according to an embodiment of this application;

FIG. 2 is a schematic diagram of a current change in a fuse blowing process;

FIG. 3 is a partial schematic diagram of a charging system 100 according to an embodiment of this application;

FIG. 4 is another schematic diagram of a charging system 200 according to an embodiment of this application;

FIG. 5 is a schematic diagram of a charging system 200 according to an embodiment of this application;

FIG. 6 is another schematic diagram of a charging system 200 according to an embodiment of this application; and

FIG. 7 is a schematic diagram of an application scenario of a charging system according to an embodiment of this application.

**DESCRIPTION OF EMBODIMENTS**

The following describes technical solutions of this application with reference to accompanying drawings.

With development of the electric vehicle industry, charging piles are increasingly widely used. A high charging speed of electric vehicles, low operating costs of the charging piles, and good charging experience are development trends of the charging industry. To improve practicability of a charging system, AC-DC parts of a charging module are usually connected in parallel, and buses are pooled. However, the following problems exist in parallel protection for a plurality of non-isolated AC-DC conversion modules:

1. Alternating current-direct current (alternating current-direct current, AC-DC) modules are similar to a Vienna topology. Even if all switching transistors are turned off, an input can still supply power to a bus.
2. When a positive bus and a negative bus of a module are short-circuited or the positive bus and the negative bus are short-circuited relative to PE, uncontrollability is resulted.

3. When a plurality of modules are connected in parallel, if one module is faulty and causes a short circuit in an output, another module connected in parallel also experiences a short circuit in an output. Without a good protection capability, all modules are damaged.

Therefore, when there are a plurality of non-isolated AC-DC conversion modules connected in parallel in the charging system, short-circuit protection needs to be separately performed on each AC-DC module, to prevent normal use of another AC-DC conversion module from being affected when any AC-DC module in the charging system is faulty. In addition, a power conversion system (Power Conversion System, PCS) in the photovoltaic industry also has functions of converting an alternating current into a direct current and converting a direct current into an alternating current. When a plurality of non-isolated AC-DC conversion modules connected in parallel are included, the same problems are also faced.

To resolve the foregoing problems, a method of disposing a switching transistor between a positive bus and a negative bus of each AC-DC conversion module is usually used. The switching transistor is generally a semiconductor switching device such as an IGBT or a MOS transistor. Specifically, when any module in the charging system has a short circuit between positive and negative outputs or is short-circuited relative to PE (Protecting earthing, PE), a current flowing through the switching transistor is large, or when the switching transistor is turned on, a voltage between two ends of the switching transistor is higher than a specified threshold, protection is triggered, and the switching transistor is turned off. Therefore, the short-circuited module is removed from a circuit, to avoid damage to another module.

However, the switching transistor such as the IGBT used in the foregoing method has high costs, and is not conducive to cost control of the charging system. In addition, because the switching transistor such as the IGBT or the MOS transistor has a high impedance, a high power loss is caused in actual use, and charging efficiency is reduced. Therefore, the switching transistor is not applicable to the charging pile industry that has a very high requirement on charging efficiency.

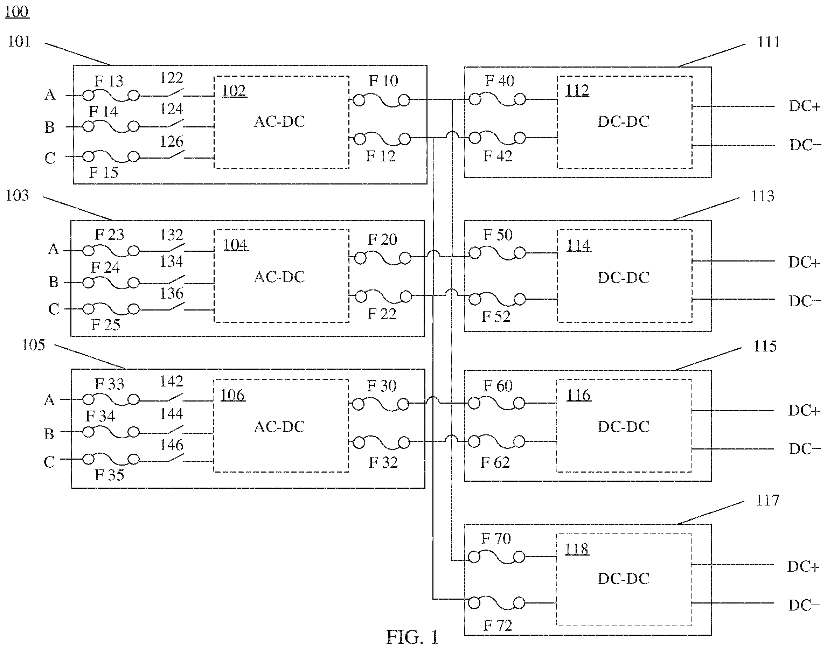

FIG. 1 is a schematic diagram of a charging system according to an embodiment of this application. As shown in the figure, the charging system includes: AC-DC conversion modules 101, 103, and 105, and direct current-direct current (direct current-direct current, DC-DC) conversion modules 111, 113, 115, and 117, where the modules 101, 103, and 105 respectively include AC-DC conversion circuits 102, 104, and 106, and the modules 111, 113, 115, and 117 respectively include DC-DC conversion circuits 112, 114, 116, and 118; input protection fuses (an example of a third fuse group) F 13, F 14, and F 15 of the circuit102, and output protection fuses (an example of a first fuse group) F 10 and F 12 of the circuit 102; input protection fuses (another example of the third fuse group) F 23, F 24, and F 25 of the circuit 104, and output protection fuses (another example of the first fuse group) F 20 and F 22 of the circuit 104; and input protection fuses (still another example of the third fuse group) F 33, F 34, and F 35 of the circuit 106, and output protection fuses (still another example of the first fuse group) F 30 and F 32 of the circuit 106; and input protection fuses (an example of a second fuse group) F 40 and F 42 of the circuit 112, input protection fuses (another example of the second fuse group) F 50 and F 52 of the circuit 114, input protection fuses (still another example of the second fuse group) F 60 and F 62 of the circuit 116, and input protection fuses (yet another example of the second fuse group) F 70 and F 72 of the circuit 118.

Output ends of the AC-DC conversion modules are connected in parallel by using a positive bus and a negative bus, and input ends of the DC-DC conversion modules are connected in parallel by using the positive bus and the negative bus, to implement bus pooling. An output protection fuse group (for example, F 10 and F 12) of the AC-DC conversion module is disposed between the AC-DC conversion circuit and an output port of the AC-DC conversion module, and an input protection fuse group of the AC-DC conversion module is disposed between the AC-DC conversion circuit and an input port of the AC-DC conversion module, to connect to input three phases. Protection fuses of the DC-DC conversion module include only input fuses. The input protection fuses of the DC-DC conversion module are disposed between the DC-DC conversion circuit and an input port of the DC-DC conversion module.

It should be understood that the DC-DC conversion module can be used as a part of the charging system, or can be used as a load, to charge the DC-DC conversion module by using the AC-DC conversion module when the charging system is idle.

It should be understood that a specific topology of the AC-DC conversion module in this embodiment of this application is not limited, provided that the AC-DC conversion module can implement a conversion function between an alternating current and a direct current and a boost function of boosting an input voltage, for example, a Vienna topology.

It should be understood that, in this embodiment of this application, a quantity of AC-DC conversion modules and a quantity of DC-DC conversion modules included in the charging system are not limited, and are not limited to a quantity of AC-DC conversion modules and a quantity of DC-DC conversion modules shown in the figure. It should be understood that the quantity of AC-DC conversion modules may be greater than the quantity of DC-DC conversion modules, or may be less than the quantity of DC-DC conversion modules. That is, one AC-DC conversion module can correspond to one or more DC-DC conversion modules, or one DC-DC conversion module can correspond to one or more AC-DC conversion modules. This is not limited in this embodiment of this application. An example in which there are three AC-DC conversion modules and three DC-DC conversion modules is used below for description.

It should be understood that, for the charging system shown in FIG. 1, a short circuit of an output bus includes: 1. The bus is short-circuited before the charging system is powered on or is short-circuited relative to PE. 2. The bus is short-circuited in a running process after the charging system is powered on. For example, the bus is short-circuited due to a module fault.

In a possible implementation, a short circuit occurs in the running process after the AC-DC conversion modules are powered on. After one AC-DC conversion module fails internally, an input fuse and an output fuse that are disposed inside the module can be used for protection, so that the faulty module is separated from the system, to prevent the fault from spreading to another module.

As an example rather than a limitation, when the AC-DC conversion circuit 102 in the AC DC module 101 is short-circuited due to a fault, a current flowing through the output protection fuse F 10 increases. That is, output currents of the other two AC-DC conversion modules 103 and 105 connected in parallel flow through the outputprotection fuse F 10 through a bus. In this case, the protection fuse F 10 should be blown, so that the module 101 is removed from the charging system, to prevent the fault from spreading to another module.

It should be understood that fuses in a same fuse group have a same specification. For example, the fuse F 10 and the fuse F 12 have a same specification.

It should be understood that a protection fuse selected based on proper selection parameters can ensure that the selected fuse effectively protects a circuit when the AC-DC conversion module is short-circuited. Specifically, the selection parameters include a rated current $I_n$, a pre-arcing Joule integral $W_A$, and an operating Joule integral $W_B$.

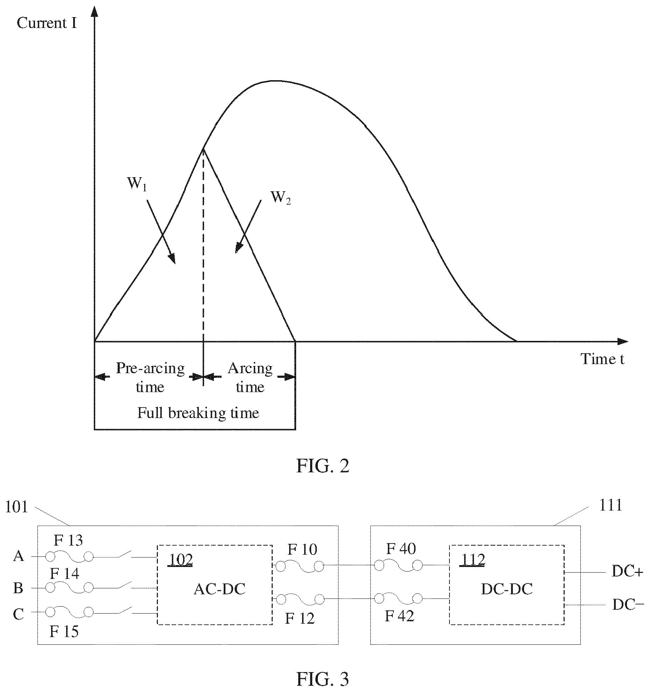

As shown in FIG. 2, the pre-arcing Joule integral $W_A=W_1$ is a Joule integral of a short circuit current absorbed by a fuse before arcing. When a short circuit occurs, a current in a loop gradually increases, and a time period from a start of the short circuit to a start of fuse blowing is pre-arcing time. Within the pre-arcing time, a current value of the short circuit current does not reach a current value that damages a component. In this case, the fuse is not blown. Certainly, when the current value of the short circuit current reaches the current value that damages the component, the fuse starts to be blown. A time period from the start of fuse blowing to complete blowing of the fuse is arcing time. The current in the short-circuited loop gradually decreases to zero within the arcing time. A sum of the pre-arcing time and the arcing time is full breaking time of the entire loop, to be specific, a time period from the start of the short circuit to the complete blowing of the fuse. Further, an integral of the full breaking time is calculated by squaring the short circuit current to obtain the operating Joule integral $W_B=W_1+W_2$, where the Joule integral $W=I^2t$.

Fuse selection requirements are explained below with reference to FIG. 1. When the AC-DC conversion circuits 102, 104, and 106 in the three AC-DC conversion modules in the figure work normally, currents flowing through the output fuses F 10, F 20, and F 30 of the three modules are respectively $I_1$, $I_2$, and $I_3$. In this case, actual working currents of the modules are close to the rated working current $I_n$. For the output fuses F 10, F 20, and F 30 of the AC-DC conversion modules, when the actual working current (or Joule integral) is higher than a specified threshold, the fuse should be blown, so that the corresponding AC-DC conversion module is removed from the circuit, and the fuses of the other AC-DC conversion modules can work normally.

As an example rather than a limitation, when the AC-DC conversion circuit 102 inside the AC-DC conversion module 101 is short-circuited, currents flowing through the output fuses F 20 and F 30 of the circuits 104 and 106 are still $I_2$ and $I_3$ respectively that are close to the rated working current $I_n$. However, for the output fuse F 10 of the circuit 101, a current $I_4$ flowing through is a sum of $I_2$ and $I_3$. That is, the current $I_4$ is close to $2I_n$. In this case, the output fuse F 10 should be blown, to remove the module 101 from the circuit. Further, when the output fuse F 10 is blown, the output fuses F 20 and F 30 should be able to work normally, to avoid damaging the modules 103 and 105.

In this case, when the positive bus and the negative bus inside the module 101 are short-circuited, the current flowing through the fuse F 10 of the circuit is $2I_n$. That is, the operating Joule integral $W_B=4I_n^2t$. In this case, the Joule integral $W_3$ of the fuses F 20 and F30 is $I_n^2t$.

It should be understood that, to ensure normal running of the fuses F 20 and F 30, $W_3$ should be less than the pre-arcing Joule integral $W_A$. Because fuses in a same fuse group have a same specification, a pre-arcing Joule integral of the fuse F 10 should be greater than a quarter of the operating Joule integral (that is,

$$W_A > \frac{1}{4}W_B$$ ).

Further, on the basis of disposing the protection fuses for the AC-DC conversion modules, in this embodiment of this application, the fuses F 40, F 42, and the like (that is, the second fuse group) are further disposed between the input port of the DC-DC conversion module and the input port of the DC-DC conversion circuit inside the DC-DC conversion module, to ensure that when the DC-DC conversion module is faulty, a corresponding protection fuse is blown, to remove the faulty DC-DC conversion module from the circuit.

It should be understood that, to ensure that the protection fuse is blown when the DC-DC conversion module is short-circuited, and that the AC-DC conversion module works normally, it needs to be ensured that an operating Joule integral of the protection fuse of the DC-DC conversion module is less than a pre-arcing Joule integral of the AC-DC conversion module.

As an example rather than a limitation, as shown in FIG. 3, when the positive bus and the negative bus of the DC-DC conversion circuit 112 inside the DC-DC conversion module 111 are short-circuited, it is assumed that currents flowing through F 10 and F 40 are the same and are $I_4$. It should be understood that, to ensure that F 40 is blown without affecting normal work of F 10, it needs to be ensured that an operating Joule integral of F 40 is less than a pre-arcing Joule integral of F 10. For example, the pre-arcing Joule integral of the fuse F 10 is selected as $W_A'=3I_n^2t$, and the operating Joule integral of the fuse F 40 is selected as $W_B'=2.25I_n^2t$. Therefore, when the module 111 is short-circuited, the fuse F 40 can be blown before the fuse F 10 without affecting normal work of the F 10, so that the faulty DC-DC conversion module 111 can be separated from the circuit without affecting another module.

It should be noted that a material and a size of the fuse are not limited in this embodiment of this application, provided that the fuse can be blown based on a Joule integral relationship when a current is greater than a specified threshold.

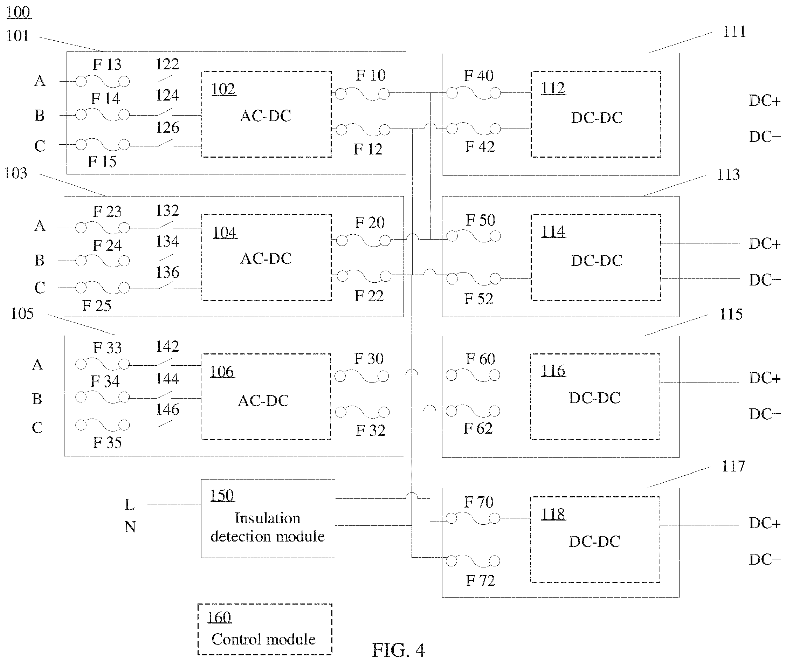

FIG. 4 is another schematic diagram of the charging system 100 according to an embodiment of this application. As shown in FIG. 4, based on FIG. 1, the charging system further includes: a relay group (an example of a switching assembly) of the AC-DC conversion module 101, including a relay 122 (an example of a first switching device), a relay 124 (an example of a second switching device), and a relay 126 (an example of a third switching device); a relay group (an example of the switching assembly) of the AC-DC conversion module 103, including a relay 132 (an example of the first switching device), a relay 134 (an example of the second switching device), and a relay 136 (an example of the third switching device); and a relay group (an example of the switching assembly) of the AC-DC conversion module 105, including a relay 142 (an example of the first switching device), a relay 144 (an example of the second switching device), and a relay 146 (an example of the third switching device), an insulation detection module 150, and a control module 160. The insulation detection module 150 is configured to detect a first impedance of the positive bus relative to protecting earthing PE and a second impedance of the negative bus relative to protecting earthing PE.

As an example rather than a limitation, when the positive bus and the negative bus are short-circuited, insulation detection may be performed by using the insulation detection module 150, and a detection result is output to the control module 160.

Specifically, the insulation detection module 150 performs insulation detection on the AC-DC conversion module, to determine at least one of the first impedance of the positive bus relative to protecting earthing PE and the second impedance of the negative bus relative to protecting earthing PE. When at least one of the measured first impedance or the measured second impedance is less than a first preset value, it is determined that an output of the module has an electric leakage risk relative to PE, and the detection result is reported to the control module 160. An insulation impedance that is from the positive bus and the negative bus to PE and that is determined by the insulation detection module is an insulation impedance (that is, the first impedance) of the positive bus relative to PE, or an insulation impedance (that is, the second impedance) of the negative bus relative to PE, or an insulation impedance of the positive bus relative to PE and an insulation impedance of the negative bus relative to PE.

It should be understood that, after receiving the detection result, the control module 160 turns off a relay, to stop the charging system from being powered on and running.

As an example rather than a limitation, the insulation detection module 150 in this embodiment of this application may be a soft-start module, and the control module 160 may be an upper computer in the charging system.

It should be understood that, in a specific implementation of this application, the charging system shown in FIG. 4 can implement all functions of the charging system shown in FIG. 1. To be specific, the output protection fuses (that is, the first fuse group) of the AC-DC conversion modules and the input protection fuses (that is, the second fuse group) of the DC-DC conversion modules are determined based on the selection parameters, to implement short-circuit protection for the AC-DC conversion modules and the DC-DC conversion modules in a power-on process. For a specific manner, refer to related content in FIG. 1. Details are not described herein again.

It should be understood that, in addition to the relay, the switching assembly disposed in front of the AC-DC conversion module may be another device, for example, a circuit breaker. This is not limited in this embodiment of this application.

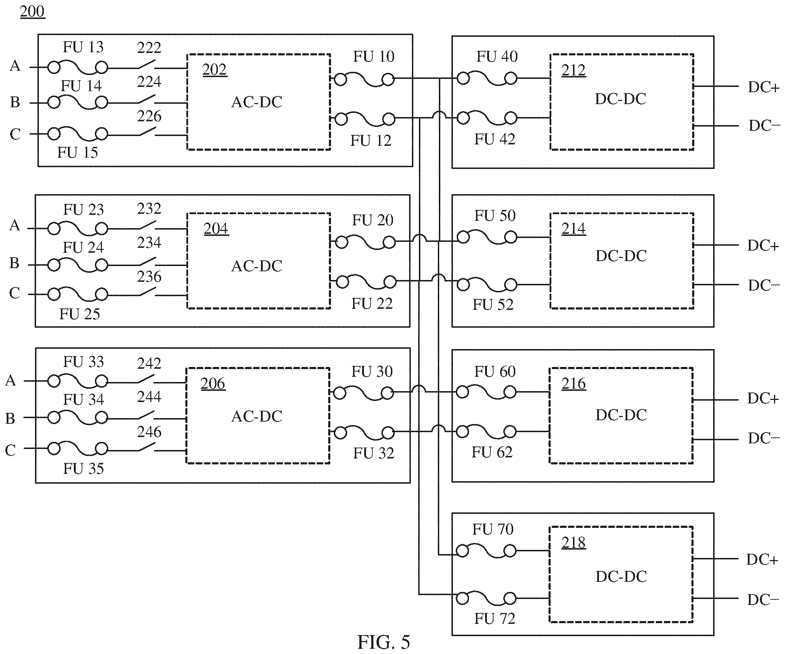

FIG. 5 is a schematic diagram of a charging system 200 according to an embodiment of this application. As shown in the figure, the charging system includes: AC-DC conversion modules 202, 204, and 206, and direct current-direct current (direct current-direct current, DC-DC) conversion modules 212, 214, 216, and 218; input protection fuses (an example of a sixth fuse group) FU 13, FU 14, and FU 15 of the circuit 202, and output protection fuses (an example of a fourth fuse group) FU 10 and FU 12 of the circuit 202; input protection fuses (another example of the sixth fuse group) FU 23, FU 24, and FU 25 of the circuit 204, and output protection fuses (another example of the fourth fuse group) FU 20 and FU 22 of the circuit 204; and input protection fuses (still another example of the sixth fuse group) FU 33, FU 34, and FU 35 of the circuit 206, and output protection fuses (still another example of the fourth fuse group) FU 30 and FU 32 of the circuit 206; and input protection fuses (an example of a fifth fuse group) FU 40 and FU 42 of the circuit 212, input protection fuses (another example of the fifth fuse group) FU 50 and FU 52 of the circuit 214, input protection fuses (still another example of the fifth fuse group) FU 60 and FU 62 of the circuit 216, and input protection fuses (yet another example of the fifth fuse group) FU 70 and FU 72 of the circuit 218.

Output ends of the AC-DC conversion modules are connected in parallel by using a positive bus and a negative bus, and input ends of the DC-DC conversion modules are connected in parallel by using the positive bus and the negative bus, to implement bus pooling. An output protection fuse group (for example, FU 10 and FU 12) of the AC-DC conversion module is disposed between the AC-DC conversion module and a positive and negative bus connection line, and an input protection fuse group of the AC-DC conversion module is disposed between the AC-DC conversion module and an input three-phase connection line. Protection fuses of the DC-DC conversion module include only input fuses. The input protection fuses of DC-DC conversion module are disposed between connection lines between each of the positive bus and the negative bus and the DC-DC conversion module.

It should be understood that the DC-DC conversion module can be used as a part of the charging system, or can be used as a load, to charge the DC-DC conversion module by using the AC-DC conversion module when the charging system is idle.

It should be understood that a specific topology of the AC-DC conversion module in this embodiment of this application is not limited, provided that the AC-DC conversion module can implement a conversion function between an alternating current and a direct current and a boost function of boosting an input voltage, for example, a Vienna topology.

It should be understood that, in this embodiment of this application, a quantity of AC-DC conversion modules and a quantity of DC-DC conversion modules included in the charging system are not limited, and are not limited to a quantity of AC-DC conversion modules and a quantity of DC-DC conversion modules shown in the figure. It should be understood that the quantity of AC-DC conversion modules may be greater than the quantity of DC-DC conversion modules, or may be less than the quantity of DC-DC conversion modules. That is, one AC-DC conversion module can correspond to one or more DC-DC conversion modules, or one DC-DC conversion module can correspond to one or more AC-DC conversion modules. This is not limited in this embodiment of this application. An example in which there are three AC-DC conversion modules and three DC-DC conversion modules is used below for description.

It should be understood that, for the charging system shown in FIG. 5, a short circuit of an output bus includes: 1. The bus is short-circuited before the charging system is powered on or is short-circuited relative to PE. 2. The bus is short-circuited in a running process after the charging system is powered on. For example, the bus is short-circuited due to a module fault.

In a possible implementation, a short circuit occurs in the running process after the AC-DC conversion modules are powered on. After one AC-DC conversion module fails internally, an input fuse and an output fuse that are disposed inside the module can be used for protection, so that the faulty module is separated from the system, to prevent the fault from spreading to another module.

It should be understood that a protection fuse selected based on proper selection parameters can ensure that the selected fuse effectively protects a circuit when the AC-DC conversion module is short-circuited. For selection parameters of the output protection fuses of the AC-DC conversion module, refer to the charging system 100. Details are not described herein again.

Further, on the basis of disposing the protection fuses for the AC-DC conversion modules, in this embodiment of this application, the fuses F 40, F 42, and the like (that is, the fifth fuse group) are further separately disposed between a junction of the bus and an input side of the DC-DC conversion module and the input side of the DC-DC conversion module, to ensure that when the DC-DC conversion module is faulty, a corresponding protection fuse is blown, to remove the faulty DC-DC conversion module from the circuit.

It should be understood that, to ensure that the protection fuse is blown when the DC-DC conversion module is short-circuited, and that the AC-DC conversion module works normally, it needs to be ensured that an operating Joule integral of the protection fuse of the DC-DC conversion module is less than a pre-arcing Joule integral of the AC-DC conversion module. For selection parameters of the protection fuses of the DC-DC conversion module, refer to the charging system 100. Details are not described herein again.

It should be noted that a material and a size of the fuse are not limited in this embodiment of this application, provided that the fuse can be blown based on a Joule integral relationship when a current is greater than a specified threshold.

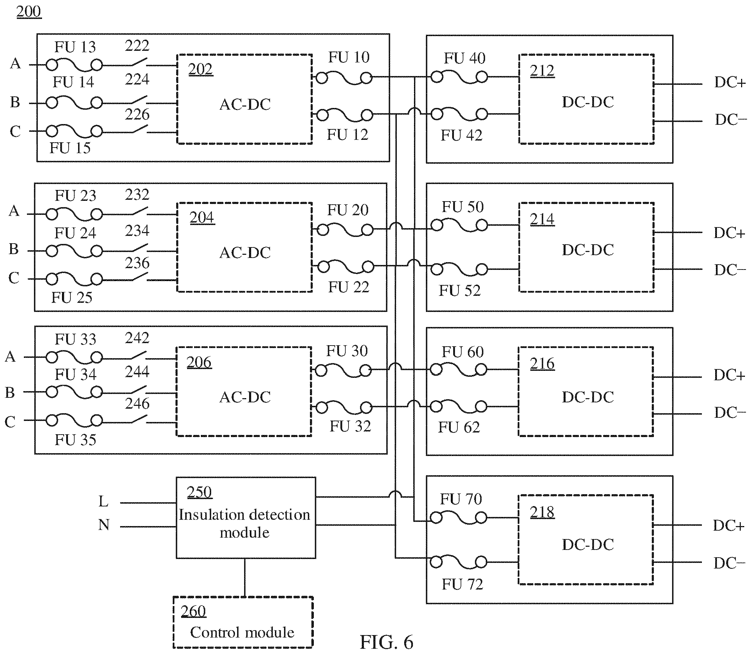

FIG. 6 is another schematic diagram of the charging system 200 according to an embodiment of this application. As shown in FIG. 6, based on FIG. 5, the charging system further includes: a relay group (an example of a switching assembly) of the AC-DC conversion module 202, including a relay 222 (an example of a fourth switching device), a relay 224 (an example of a fifth switching device), and a relay 226 (an example of a sixth switching device); a relay group (an example of the switching assembly) of the AC-DC conversion module 204, including a relay 232 (an example of the fourth switching device), a relay 234 (an example of the fifth switching device), and a relay 236 (an example of the sixth switching device); and a relay group (an example of the switching assembly) of the AC-DC conversion module 206, including a relay 242 (an example of the fourth switching device), a relay 244 (an example of the fifth switching device), and a relay 246 (an example of the sixth switching device), an insulation detection module 250, and a control module 260. The insulation detection module 250 is configured to detect a third impedance of the positive bus relative to protecting earthing PE a fourth impedance of the negative bus relative to protecting earthing PE.

As an example rather than a limitation, when the positive bus and the negative bus are short-circuited, insulation detection may be performed by using the insulation detection module 250, and a detection result is output to the control module 260.

Specifically, the insulation detection module 250 performs insulation detection on the AC-DC conversion module, to determine at least one of the first impedance of the positive bus relative to protecting earthing PE and the second impedance of the negative bus relative to protecting earthing PE. When at least one of the measured first impedance or the measured second impedance is less than a first preset value, it is determined that an output of the module has an electric leakage risk relative to PE, and the detection result is reported to the control module 260. An insulation impedance that is from the positive bus and the negative bus to PE and that is determined by the insulation detection module is an insulation impedance (that is, the third impedance) of the positive bus relative to PE, or an insulation impedance (that is, the fourth impedance) of the negative bus relative to PE, or an insulation impedance of the positive bus relative to PE and an insulation impedance of the negative bus relative to PE.

It should be understood that, after receiving the detection result, the control module 260 turns off a relay, to stop the charging system from being powered on and running.

As an example rather than a limitation, the insulation detection module 250 in this embodiment of this application may be a soft-start module, and the control module 260 may be an upper computer in the charging system.

It should be understood that, in a specific implementation of this application, the charging system shown in FIG. 6 can implement all functions of the charging system shown in FIG. 5. To be specific, the output protection fuses (that is, the fourth fuse group) of the AC-DC conversion modules and the input protection fuses (that is, the fifth fuse group) of the DC-DC conversion modules are determined based on the selection parameters, to implement short-circuit protection for the AC-DC conversion modules and the DC-DC conversion modules in a power-on process. For a specific manner, refer to related content in FIG. 5. Details are not described herein again.

It should be understood that, in addition to the relay, the switching assembly disposed in front of the AC-DC conversion module may be another device, for example, a circuit breaker. This is not limited in this embodiment of this application.

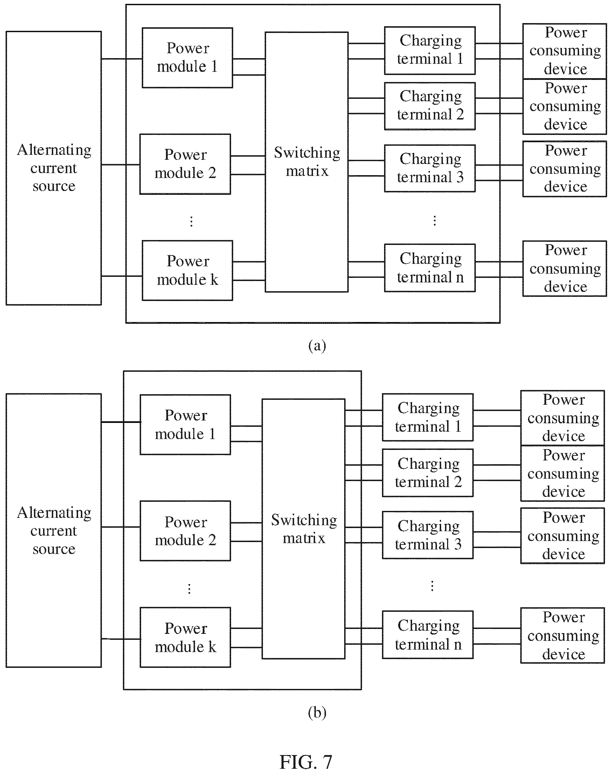

FIG. 7 is a schematic diagram of an application scenario of a charging system according to an embodiment of this application.

(a) in FIG. 7 corresponds to an integrated charging pile. To be specific, the integrated charging pile includes k power modules, a switching matrix, and n charging terminals. The charging pile is powered by an alternating current source (for example, a power grid), and is connected to and supplies power to power consuming devices by using one or more of the n charging terminals.

(b) in FIG. 7 corresponds to a split charging pile. To be specific, n charging terminals of the charging pile are separated from k power modules and a switching matrix. The charging pile is powered by an alternating current source (for example, a power grid), and is connected to and supplies power to power consuming devices by using one or more of the n charging terminals.

The charging system provided in embodiments of this application belongs to the power module in FIG. 7. To be specific, the power module 1, the power module 2, ..., and the power module n can all include the AC-DC conversion modules and the DC-DC conversion modules provided in embodiments of this application, so that when an internal fault occurs in any power module, the faulty AC-DC conversion module or DC-DC conversion module can be separated from the system, to avoid affecting normal use of another AC-DC conversion module or DC-DC conversion module in the same power module.

It should be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification usually indicates an "or" relationship between associated objects.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed apparatus may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The parts described as separate components may or may not be physically separate, and components displayed as parts may or may not be physical units, in other words, may be located in one position, or may be distributed on a plurality of parts. Some or all of the units may be selected based on actual requirements to achieve the objectives of the solutions of embodiments.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging system, comprising:

M alternating current-direct current, AC-DC conversion modules, wherein M is a positive integer, each AC-DC conversion module comprises an AC-DC conversion circuit and a first fuse group, and the first fuse group comprises two fuses; an input side of the AC-DC conversion circuit is configured to be connected to an alternating current source; and a positive output end of the AC-DC conversion circuit is connected to a first bus by using one fuse in the first fuse group, and a negative output end of the AC-DC conversion circuit is connected to a second bus by using the other fuse in the first fuse group; and N direct current-direct current, DC-DC conversion modules, wherein $N \geq 1$, each DC-DC conversion module comprises a DC-DC conversion circuit, a positive input end of the DC-DC conversion circuit is configured to be connected to the first bus, and a negative input end of the DC-DC conversion circuit is configured to be connected to the second bus.

2. The charging system according to claim 1, wherein each DC-DC conversion module comprises a second fuse group, and the second fuse group comprises two fuses; and the positive input end of the DC-DC conversion circuit is connected to the first bus by using one fuse in the second fuse group, and the negative input end of the DC-DC conversion circuit is connected to the second bus by using the other fuse in the second fuse group.

3. The charging system according to claim 1 or 2, wherein each AC-DC conversion module comprises a third fuse group, and the third fuse group comprises three fuses; and
a first input end of the AC-DC conversion circuit is connected to a first fuse in the third fuse group, a second input end of the AC-DC conversion circuit is connected to a second fuse in the third fuse group, and a third input end of the AC-DC conversion circuit is connected to a third fuse in the third fuse group.

4. The charging system according to claim 1 or 2, wherein each AC-DC conversion module comprises a switching assembly, and the switching assembly comprises three switching devices; and
a first input end of the AC-DC conversion circuit is connected to a first switching device in the switching assembly, a second input end of the AC-DC conversion circuit is connected to a second switching device in the switching assembly, and a third input end of the AC-DC conversion circuit is connected to a third switching device in the switching assembly.

5. The charging system according to claim 3, wherein each AC-DC conversion module comprises a switching assembly, and the switching assembly comprises three switching devices; and
the first input end of the AC-DC conversion circuit is connected to the first fuse by using a first switching device in the switching assembly, the second input end of the AC-DC conversion circuit is connected to the second fuse by using a second switching device in the switching assembly, and the third input end of the AC-DC conversion circuit is connected to the third fuse by using a third switching device in the switching assembly.

6. The charging system according to any one of claims 1 to 5, wherein M≥3; and
a pre-arcing Joule integral of the fuse in the first fuse group is $W_A$, an operating Joule integral of the fuse is $W_B$, and $W_A > 0.25 W_B$.

7. The charging system according to any one of claims 1 to 6, wherein an operating Joule integral of the fuse in the second fuse group is less than the pre-arcing Joule integral of the fuse in the first fuse group.

8. The charging system according to any one of claims 4 to 7, wherein the charging system comprises an insulation detection module, and the insulation detection module is configured to detect at least one of a first impedance of the first bus relative to protecting earthing PE or a second impedance of the second bus relative to protecting earthing PE; and
a control module, wherein the control module is configured to:
in response to that the at least one of the first impedance or the second impedance is less than a first preset value, turn off the switching assembly.

9. The charging system according to any one of claims 1 to 8, wherein an output end of each DC-DC conversion module is configured to be connected to a power consuming device, and each DC-DC conversion module is configured to output a current to charge the power consuming device.

10. An AC-DC conversion module, wherein the AC-DC conversion module comprises an AC-DC conversion circuit, a first fuse group, and input and output ports, wherein

an input side of the AC-DC conversion circuit is configured to be connected to an alternating current source; and
a positive output end of the AC-DC conversion circuit is connected to a positive output port of the AC-DC conversion module by using one fuse in the first fuse group, and a negative output end of the AC-DC conversion circuit is connected to a negative output port of the AC-DC conversion module by using another fuse in the first fuse group.

11. The AC-DC conversion module according to claim 10, wherein the AC-DC conversion module comprises a third fuse group, and the third fuse group comprises three fuses; and
a first input end of the AC-DC conversion circuit is connected to a first input port of the AC-DC conversion module by using a first fuse in the third fuse group, a second input end of the AC-DC conversion circuit is connected to a second input port of the AC-DC conversion module by using a second fuse in the third fuse group, and a third input end of the AC-DC conversion circuit is connected to a third input port of the AC-DC conversion module by using a third fuse in the third fuse group.

12. The AC-DC conversion module according to claim 10 or 11, wherein the AC-DC conversion module comprises a switching assembly, and the switching assembly comprises three switching devices; and
the first input end of the AC-DC conversion circuit is connected to the first fuse by using a first switching device in the switching assembly, the second input end of the AC-DC conversion circuit is connected to the second fuse by using a second switching device in the switching assembly, and the third input end of the AC-DC conversion circuit is connected to the third fuse by using a third switching device in the switching assembly.

13. A charging system, comprising:

J alternating current-direct current, AC-DC conversion modules, wherein J is a positive integer, an input side of each AC-DC conversion module is configured to be connected to an alternating current source, each AC-DC conversion module comprises one positive output port and one negative output port, the positive output port of each AC-DC conversion module is configured to be connected to a first bus, and the negative output port of each AC-DC conversion module is configured to be connected to a second bus;
K direct current-direct current conversion DC-DC conversion modules, wherein K≥1, each DC-DC conversion module comprises one positive input port and one negative input port, the positive input port of each DC-DC conversion module is configured to be connected to the first bus, and the negative input port of each DC-DC conversion module is configured to be connected to the second bus;
J fourth fuse groups, wherein the J fourth fuse groups are in a one-to-one correspondence with the J AC-DC conversion modules, each fourth fuse group comprises two fuses, a positive output port of a j$^{th}$ AC-DC conversion module is connected to the first bus by using one fuse in a j$^{th}$ fourth fuse group, and a negative output port of the j$^{th}$ AC-DC conversion module is connected to the second bus by using the other fuse in the j$^{th}$ fourth fuse group, wherein j∈[1, J], and the j$^{th}$ fourth fuse group corresponds to the j$^{th}$ AC-DC conversion module; and
K fifth fuse groups, wherein the K fifth fuse groups are in a one-to-one correspondence with the K DC-DC conversion modules, each fifth fuse group comprises two fuses, a positive input port of a k$^{th}$ DC-DC conversion module is connected to the first bus by using one fuse in a k$^{th}$ fifth fuse group, and a negative input port of the k$^{th}$ DC-DC conversion module is connected to the second bus by using the other fuse in the k$^{th}$ fifth fuse group, wherein k∈[1, K], and the k$^{th}$ fifth fuse group corresponds to the k$^{th}$ DC-DC conversion module.

14. The charging system according to claim 13, wherein J≥3; and
a pre-arcing Joule integral of the fuse in the fourth fuse group is $W_A$, an operating Joule integral of the fuse is $W_B$, and $W_A>0.25W_B$.

15. The charging system according to claim 13 or 14, wherein an operating Joule integral of the fuse in the fifth fuse group is less than the pre-arcing Joule integral of the fuse in the fourth fuse group.

FIG. 1

Current I

$W_1$

$W_2$

Pre-arcing
time

Arcing
time

Full breaking time

Time t

FIG. 2

101

F 13

A

F 14

B

C

F 15

102

AC-DC

F 10

F 12

111

F 40

F 42

112

DC-DC

DC+

DC−

FIG. 3

FIG. 4

FIG. 5

200

FIG. 6

(a)

(b)

FIG. 7

Europäisches
Patentamt

European
Patent Office

Office européen
des brevets

# EUROPEAN SEARCH REPORT

Application Number

EP 24 16 1511

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/243196 A1 (SMA SOLAR TECHNOLOGY AG [DE]) 24 November 2022 (2022-11-24) | 1,2, 4-10, 12-15 | INV. H02J7/02 H02M1/32 |
| Y | * pages 8-9; figures 2,3 * | 3,11 | |
| X | US 8 208 276 B2 (SATO EDUARDO KAZUHIDE [JP]; KINOSHITA MASAHIRO [JP] ET AL.) 26 June 2012 (2012-06-26) * column 3, line 28 - column 5, line 30; figures 1,2 * | 1,10 | |
| X | CN 114 977 168 A (SHANGHAI ANSHIBO ENERGY TECH CO LTD) 30 August 2022 (2022-08-30) | 1,10,13 | |
| Y | * figure 4 * | 3,11 | |

TECHNICAL FIELDS SEARCHED (IPC)

H02J
H02M

The present search report has been drawn up for all claims

| Place of search | Date of completion of the search | Examiner |
|---|---|---|
| Munich | 17 September 2024 | Bergler, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 1511

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2024

| Patent document cited in search report | Publication date | Patent family member(s) | Publication date |
|---|---|---|---|
| WO 2022243196 A1 | 24-11-2022 | DE 102021113205 A1<br>WO 2022243196 A1 | 24-11-2022<br>24-11-2022 |
| US 8208276 B2 | 26-06-2012 | CA 2718620 A1<br>CN 101953062 A<br>JP 5159888 B2<br>JP WO2010095241 A1<br>KR 20100103642 A<br>TW 201034328 A<br>US 2011051478 A1<br>WO 2010095241 A1 | 26-08-2010<br>19-01-2011<br>13-03-2013<br>16-08-2012<br>27-09-2010<br>16-09-2010<br>03-03-2011<br>26-08-2010 |
| CN 114977168 A | 30-08-2022 | CN 114977168 A<br>US 2023412063 A1 | 30-08-2022<br>21-12-2023 |

EPO FORM P0459

For more details about this annex : see Official Journal of the European Patent Office, No. 12/82